# EUROPEAN PATENT APPLICATION

(11) **EP 1 936 918 A1**
(43) Date of publication of application: **25.06.2008**
(21) Application number: 07702189.7
(22) Date of filing: 24.01.2007
(51) Int. Cl.: H04L 29/06

(54) **METHOD AND SYSTEM FOR REALIZING SERVICE SELF-HELP IN A CIRCUIT DOMAIN TERMINAL**

(30) Priority: 24.01.2006 CN 200610033376
(71) Applicant: Huawei Technologies Co., Ltd., Longgang District, Shenzhen Guangdong 518129 (CN)
(72) Inventor: HUANG, Shibi, Guangdong 518129 (CN)
(74) Representative: Thun, Clemens
(86) International application number: PCT/CN2007/000264
(87) International publication number: WO 2007/085190

(57) **Abstract**

A method and a system for implementing a self service by using a circuit switched terminal are provided. The method includes communicating a self-service signaling associated with a self service between a self-service adaptation entity and a circuit switched terminal; and conducting, by the self-service adaptation entity, a configuration of service data of the self service on an IP Multimedia Subsystem IMS network entity associated with the self service. The solution provided enables a user using the conventional circuit switched terminal to conveniently implement the self service such as registration activation, registration cancellation, and authentication of the self service.

## Description

### Field of the Invention

The present invention relates to self-service technology, and particularly to a method and system for implementing a self service in a packet network by using a circuit switched terminal.

### Background of the invention

Along with improvement of packet technology, conventional circuit switched networks are evolving into packet networks, and using packet terminals by subscribers to access the packet networks is a trend of a future development. Operators, however, should gradually replace existing PSTN/ISDN networks by packet networks, and make the existing PSTN/ISDN networks smoothly evolve into Next Generation Networks (NGNs). This requires that, after the existing PSTN/ISDN networks are replaced by packet networks, existing PSTN/ISDN subscribers should be not aware of network modifications, the existing network terminals and user-network interfaces can also be used, and service experiences should be not changed.

IP Multimedia Sub-system (IMS) is a packet-based network, and is a subsystem supporting IP multimedia services and is put forward by 3rd Generation Partnership Project (3GPP) in Release 5. Characters of IMS are using Session Initiation Protocol (SIP) and accessing independence. IMS functions as a multimedia control/call control platform in Packet Subsystem (PS), supports session and non-session multimedia services, and provides a general service platform for future multimedia applications. IMS core network is based on IP packet technology, is a blending solution of network evolution, and is also an important trend of future network development.

Existing solutions for circuit switched terminals accessing to packet networks may generally include two kinds of solutions, one is PSTN/ISDN Emulation technology and the other is using an IP Multimedia Subsystem (IMS) compatible with circuit switched terminal.

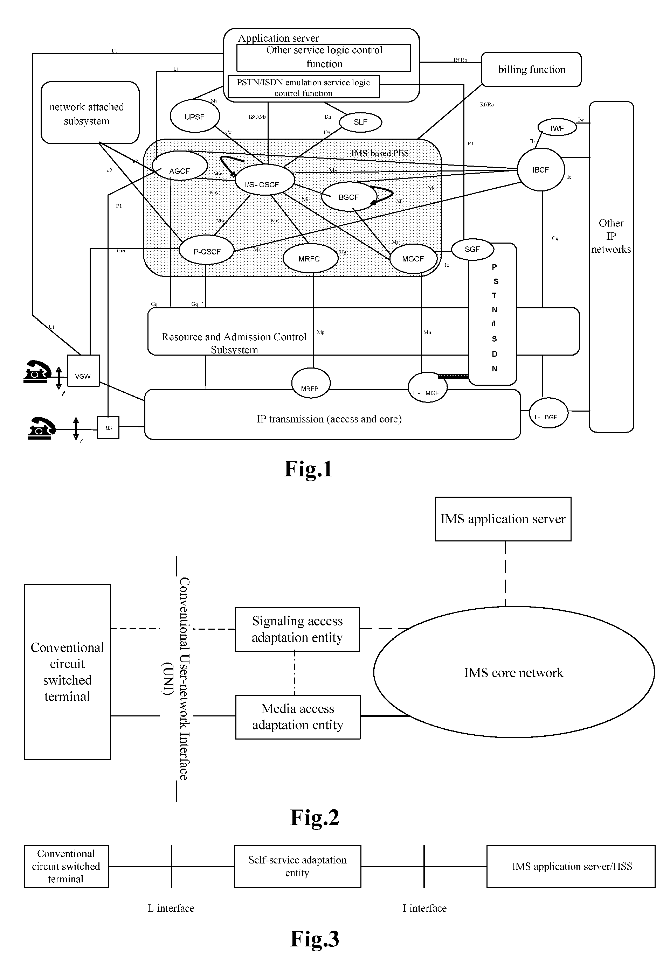

In the present studies of the associated standard organization, modifying and replacing PSTN/ISDN core network by a packet core network is called PSTN/ISDN Emulation. Figure 1 shows IMS-based PSTN/ISDN Emulation Subsystem architecture. In figure 1, functions such as Access Gateway Control Function (AGCF) and Media Gateway (MG) are employed to support a conventional PSTN terminal to access an IMS network, and PSTN logic control function is replaced by one or more application servers of the IMS network accordingly.

For the IMS compatible with circuit switched terminal, since in the process of the existing networks evolving into broadband multimedia IMS networks, it is difficult to popularize SIP multimedia intellectual terminals capable of directly supporting IP interfaces in a short time. During a long time for network evolvement, even though IMS core network has already been used, it is necessary to concern how to make the IMS core network be compatible with a great deal of circuit switched terminals used in original networks. Therefore, a solution of supporting the circuit switched terminals to access an IMS core network and providing IMS service to these circuit switched terminals is desired.

However, for users using circuit switched terminals to access a packet network, a solution for implementing a self service in a well known mode is also desired.

### Summary of the Invention

A method, a system, a self-service adaptation entity and a signaling access adaptation entity for implementing a self service by using a circuit switched terminal are provided by embodiments of the present invention, in order to implement a self service in a well known mode when a user uses a circuit switched terminal to access a packet network.

A method for implementing a self service by using a circuit switched terminal may include:
communicating a self-service signaling associated with a self service between a self-service adaptation entity and a circuit switched terminal; and
conducting, by the self-service adaptation entity, a configuration of service data of the self service on an IP Multimedia Subsystem IMS network entity associated with the self service.

A system for implementing a self service by using a circuit switched terminal may include:
a circuit switched terminal, adapted to communicate a self-service signaling associated with a self service with a self-service adaptation entity;
an IP Multimedia Subsystem IMS network entity, adapted to configure service data of the self service; and
the self-service adaptation entity, adapted to communicate the self-service signaling associated with the self service with the circuit switched terminal, and control the IMS network entity to configure the service data of the self service.

A self-service adaptation entity may include:
a first unit, adapted to communicate a self-service signaling associated with a self service with a circuit switched terminal; and
a second unit, adapted to control an IP Multimedia Subsystem IMS network entity associated with the self service to configure service data of the self service.

A signaling access adaptation entity may include:
a signaling access adaptation unit, adapted to convert a self-service signaling associated with a self service from a circuit switched terminal into an IP-based signaling; and
a self-service adaptation entity, adapted to control an IP Multimedia Subsystem IMS network entity associated with the self service to configure service data of the self service according to the IP-based signaling.

According to embodiments of this invention, the self-service adaptation entity communicates self-service signaling associated with a self service with the circuit switched terminal, and controls an IMS network entity associated with the self service to configure service data of the self service, so as to enable a user using the conventional circuit switched terminal to conveniently implement the self service such as registration activation, registration cancellation, and authentication of the self service. The method provided by this invention may be suitable for IMS-based circuit domain emulation application, IMS network compatible circuit switched terminal application or the like, and there is a practical and wide perspective for its further application.

### Brief Description of the Drawings

The present invention is hereinafter further described in detail with respect to the accompanying drawings and embodiments. It should be noted that the following description is only specific embodiments described in this disclosure and is not for use in limiting the protection scope of the present invention. The accompanying drawings are as follows.
Figure 1 is a schematic illustrating an IMS-based PES structure;
Figure 2 is a schematic illustrating a circuit switched terminal connecting to an IMS network;
Figure 3 is a schematic illustrating a process of implementing a self service in an IMS network using a circuit switched terminal;
Figure 4 is a schematic illustrating a process of implementing a self service in accordance with an embodiment of this invention;
Figure 5 is a schematic illustrating a process of implementing a self service in accordance with an embodiment of this invention;
Figure 6 is a schematic illustrating a process of implementing a self service in accordance with an embodiment of this invention; and
Figure 7 is a schematic structure of a signaling access adaptation entity in accordance with an embodiment of this invention.

### Detailed Description of the Invention

Whether in an application using an IMS-based circuit switched emulation or in an application using an IMS network compatible with circuit switched terminals, circuit switched terminals connect to an IMS network via certain function adaptation entities, and certain application servers in the IMS network are employed to support circuit switched emulation and/or IMS supplementary services. As shown in figure 2, circuit switched terminals connects to an IMS network via a signaling access adaptation entity and a media access adaptation entity. The circuit switched terminals are connected to the signal access adaptation entity and the media access adaptation entity via analogue user-network interfaces such as analog user line interfaces and ISDN basic-rate interfaces. Protocols running on interfaces between the signal access adaptation entity and the IMS network are IP-based broadband signaling protocols, and protocols running on interfaces between the media access adaptation entity and the IMS network are IP-based broadband media stream protocols. These protocols may include SIP, Extensible Markup Language (XML) Configuration Access Protocol (XCAP), Real-time Transport Protocol (RTP), etc. The signaling access adaptation entity is used for adaptation and conversion between narrowband signaling from the circuit switched terminals and broadband signaling from the IMS network, and the media access adaptation entity is used for adaptation and conversion between the conventional narrowband sessions bearing and IP-based sessions bearing.

As shown in figure 2, an IMS-based packet network is used as a core network, and services are provided by an application server. In such a case, the function adaptation entities, e.g. the signaling access adaptation entity and the media access adaptation entity, are unable to configure self-service data directly, thus the IMS network needs an entity capable of analyzing self-service operating signaling from analogue user-network interfaces of the circuit switched terminals, and needs a mechanism capable of configure service data on entities associated with the self-service operating signaling, such as an application server and a Home Subscriber Server (HSS).

Figure 3 shows a schematic illustrating a process of implementing a self service in an IMS network by using a circuit switched terminal. The entity on left-hand of the figure indicates a circuit switched terminal connected to the IMS network, such as an analog telephone, an ISDN terminal, a GSM terminal. The entity on right-hand of the figure indicates an IMS network entity associated with the self service, such as an application server, and provides self-service data query, modification, etc. A self-service adaptation entity in the middle of the figure is a new function entity introduced to enable a circuit switched terminal to connect to the IMS network to implement the self service. The self-service adaptation entity communicates self-service signaling with the circuit switched terminal, analyzes self-service operating commands in the self-service signaling, and conducts operations such as modifying or querying service data of the self service on the IMS network entity via an appropriate mechanism. An L interface between the circuit switched terminal and the self-service adaptation entity is adapted to transmit the self-service signaling, and may be an analog user line interface, an ISDN basic-rate interface, etc. An I interface between the self-service adaptation entity and the IMS network entity is adapted to transmit service data modification and service data query information. The I interface may be a Ut interface defined by the 3GPP standard organization for enabling an IMS terminal to operate and maintain the service data.

According to an embodiment of the present invention, implementing a self service using a circuit switched terminal via a self-service adaptation entity may include the followings. The self-service adaptation entity communicates self-service signaling with the circuit switched terminal. The self-service adaptation entity conducts operations such as service data modification and query on an IMS network entity (e.g., an application server, an HSS, etc) according to self-service operating commands sent by the circuit switched terminal. The IMS network entity is an entity involved in the self service.

The self-service adaptation entity may be implemented on various function entities in the network.

In one embodiment of the present invention, a self-service adaptation entity is located in a signaling access adaptation entity which is located between a circuit switched terminal and an IMS network. The signaling access adaptation entity receives a self-service signaling from the circuit switched terminal. The self-service adaptation entity analyzes the self-service signaling, and according to the self-service signaling, conducts operations such as service data query or modification on an IMS entity via an Ut interface defined by the 3GPP. An XCAP protocol may run on the Ut interface for implementing operations such as self-service data query and modification on the IMS entity.

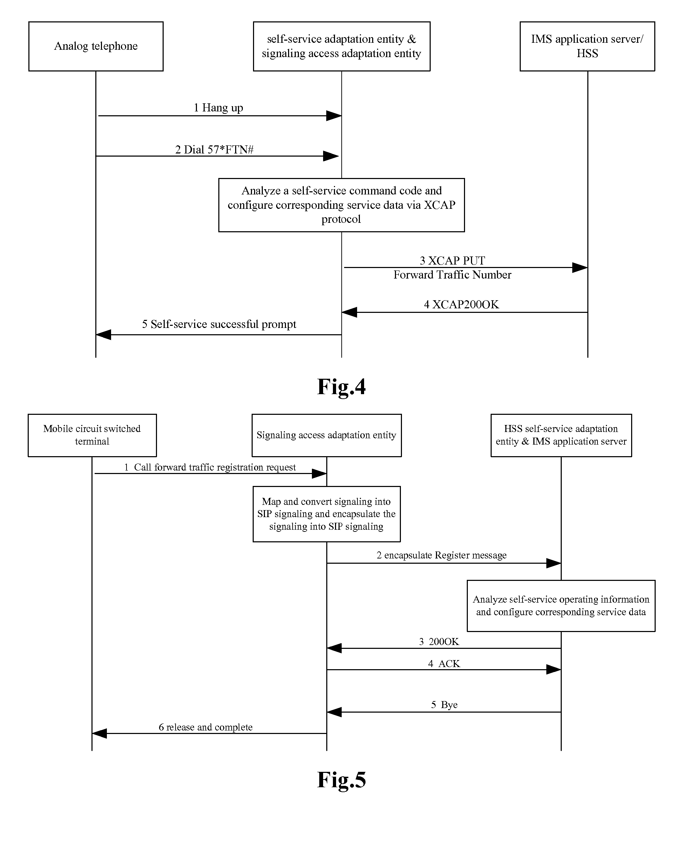

Figure 4 shows a process of implementing a self service on an IMS network when an analog telephone connects to the IMS network.

A1 and A2: The analog telephone is hang up, and a self-service command code "*57*FTN#" is dialed. The analog telephone carries the self-service command code in a self-service signaling, and sends the self-service signaling to a self-service adaptation entity via a user-network interface. The self-service adaptation entity is implemented on a signaling access adaptation entity.

In response to the self-service signaling, the self-service adaptation entity analyzes the self-service signaling, determines that a registration of a call forwarding unconditional service is requested according to the self-service command code in the self-service signaling, and configures a forward traffic number.

A3: The signaling access adaptation entity converts the self-service signaling sent by the analog telephone into an XCAP signaling, and sends the XCAP signaling to an IMS application server or an HSS. The XCAP signaling carries the forward traffic number configured by the self-service adaptation entity and carries configure information of service data associated with the self service, i.e. the registration of the call forwarding unconditional service.

A4: The IMS application server or HSS receives the XCAP signaling, and conducts operations on the service data associated with the self-service according to the XCAP signaling. In response to a successful operation, a success message XCAP 2000K is returned to the signaling access adaptation entity.

A5: The signaling access adaptation entity prompts the analog telephone via the user-network interface to indicate that the self service is successfully implemented.

In another embodiment, a self-service adaptation entity function is implemented on an IMS entity that supports operations such as query and/or modification of service data. For example, the self-service adaptation entity function is implemented on an application server or on an HSS. Since the self-service adaptation entity is implemented on the IMS entity, the I interface in figure 3 is an internal interface. A self-service signaling from a circuit switched terminal is transmitted to the self-service adaptation entity via a signaling access adaptation entity. An interface between the circuit switched terminal and the signaling access adaptation entity is still a conventional user-network interface, such as an analog user line interface and an ISDN basic-rate interface. An interface between the signaling access adaptation entity and the self-service adaptation entity is an IMS-based structure, which usually uses an SIP to transmit self-service information between the circuit switched terminal and the self-service adaptation entity. The self-service information may be transmitted between the signaling access adaptation entity and the self-service adaptation entity in two modes.
1) The signaling access adaptation entity converts the self-service signaling from the circuit switched terminal into an SIP signaling. For example, the signaling access adaptation entity may converts a self-service command code in the self-service signaling sent by the circuit switched terminal to a Request-URI field of an SIP Invite message, and send the SIP Invite message to the self-service adaptation entity to initiate a self service.
2) The signaling access adaptation entity converts the self-service signaling from the circuit switched terminal into an SIP signaling, and encapsulates signaling messages between the conventional circuit switched terminal and the signaling access adaptation entity in an SIP message. The SIP protocol is used to transmit the self-service signaling in an IMS network. For the self-service signaling from the circuit switched terminal, such as DSSI signaling defined by ITU-T and Mobile radio interface layer 3 protocol signaling defined by 3GPP, a new Media Type is needed to be defined in an SIP message body to encapsulate the self-service signaling from the circuit switched terminal into an SIP signaling. The new Media Type may be formatted as:
   Media type name: application
   Media subtype name: DSS1-Message
   Required parameters: Version
   Optional parameters: base
   Encoding scheme: binary

The Media subtype name denotes a name of a self-service signaling from the circuit switched terminal, such as a name of a DSS1 signaling and a name of a Mobile radio interface layer 3 protocol signaling. Parameter "version" denotes a protocol released by different organizations such as ITU-T, ETSI, ANSI, and 3GPP. Parameter "base" denotes a version number of a protocol used for transmitting the conventional signaling on a conventional user-network interface.

Figure 5 shows a process of implementing a self service according to an embodiment of the present invention. An ISDN terminal of mobile circuit domain is employed as a conventional circuit switched terminal, and other circuit switched terminals and other terminals of the mobile circuit domain may also be employed.

B1: The ISDN terminal sends a register request for registering a call forwarding unconditional service to a signaling access adaptation entity via a user-network interface of mobile circuit domain. The register request carries a self-service command code obtained through a communication with the ISDN terminal via the user-network interface.

B2 and B3: The signaling access adaptation entity converts the register request from the user-network interface into an SIP signaling. That is, the signaling access adaptation entity converts a Register message into an SIP Invite message, and encapsulates the Register message in the SIP Invite message and sends the SIP Invite message to a self-service adaptation entity.

After receiving the SIP Invite message, the self-service adaptation entity obtains the self-service command code and analyzes the self-service command code and other information included in the SIP Invite message. In this embodiment, the self-service command code represents a registration of a call forwarding unconditional service. According to the self-service command code and other information included in the SIP Invite message, an IMS application server activates the call forwarding unconditional service and configures service data of the call forwarding unconditional service, e.g. configures a destination number of the call forwarding unconditional service.

Also in another embodiment, a self-service adaptation entity may also be separately provided in an IMS network. In such a case, a conventional circuit switched terminal transmits self-service signaling of a self service to a self-service adaptation entity via a signaling access adaptation entity. The self-service adaptation entity analyzes the self-service signaling, analyzes the self-service signaling, and according to the self-service signaling, conducts operations such as service data query or modification on an IMS entity via an Ut interface defined by the 3GPP. An XCAP protocol may run on the Ut interface for implementing such operations as self-service data query and modification on the IMS entity.

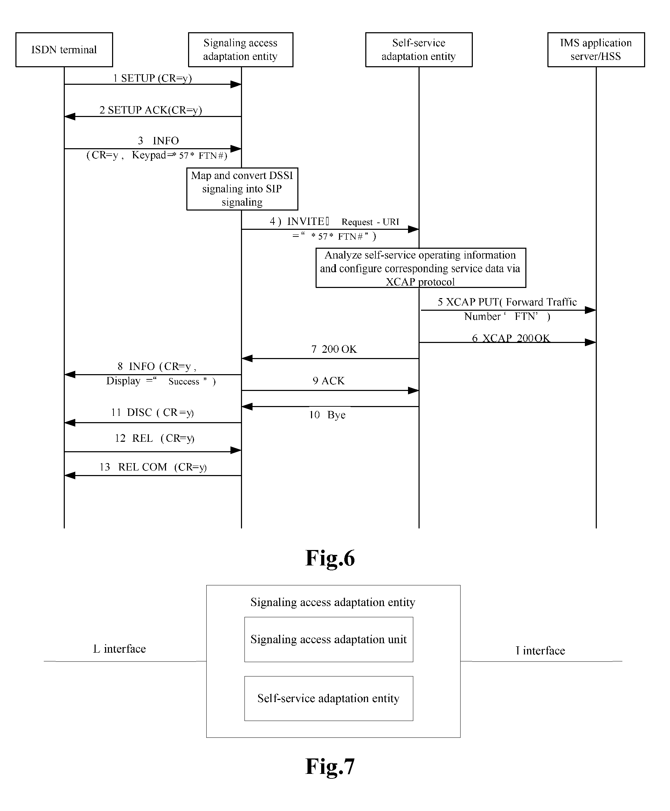

Figure 6 shows process of implementing a self service in the case that the self-service adaptation entity is separately provided. In this embodiment, the conventional circuit switched terminal is an ISDN terminal. The ISDN terminal communicates with a signaling access adaptation entity via a conventional ISDN DSSI user-network interface.

C1-C3: The ISDN terminal communicates with the signaling access adaptation entity using DSSI signaling. These processes are well-known for those skilled in the art and are no longer described here in detail.

C4, The signaling access adaptation entity converts the DSS1 signaling into an SIP signaling, converts a self-service command code contained in the DSS1 signaling into a Request-URI field in the SIP Invite message, and sends the SIP Invite message to the signaling access adaptation entity for requesting a self service. The self-service adaptation entity receives the SIP Invite message from the signaling access adaptation entity, determines that a registration of a call forwarding unconditional service is requested according to the self-service command code in the self-service signaling, and configures a forward traffic number.

C5: The self-service adaptation entity converts the SIP Invite message into an XCAP signaling, and the XCAP signaling carries configuration information of service data associated with the self service and carries the forward traffic number configured by the self-service adaptation entity.

C6: An IMS application server or HSS entity receives the XCAP signaling, and conducts operations on the service data associated with the self service according to the XCAP signaling. In response to a successful operation, a success message XCAP 2000K is returned to the self-service adaptation entity.

A system for implementing a self service in a packet network using a circuit switched terminal is provided in an embodiment of this invention. The system may include a circuit switched terminal, a self-service adaptation entity communicating information associated with a self service with the circuit switched terminal, and an IMS network entity providing service data associated with the self service. The self-service adaptation entity may be adapted to communicate the information associated with the self service with the circuit switched terminal, and control the IMS network entity to configure service data associated with the self service. The system may further include a signaling access adaptation entity, which is adapted to receive signaling associated with the self service from the circuit switched terminal, convert the signaling into an SIP signaling, and send the SIP signaling to the self-service adaptation entity. The IMS network entity may be an IMS application server or an HSS. Implementations of the system are apparent in above embodiments. For example, the self-service adaptation entity may be configured on the signaling access adaptation entity, or be configured on the IMS entity such as an application server or an HSS where operations such as query or modification of service data are conducted, or be configured separately in the IMS network. Detailed embodiments of the implementations of the system are apparent in above embodiments and are not described in detail anymore. Those skilled in the art should understand that the system is not limited to the above embodiments.

A self-service adaptation entity in one embodiment of this invention is adapted to communicate signaling associated with a self service with a circuit switched terminal, analyze the signaling, and control an IMS network entity to configure service data associated with the self service. The signaling access adaptation entity is not limited to these functions. More other functions of the signaling access adaptation entity are apparent in above embodiments and are not described in detail anymore.

Figure 7 shows a signaling access adaptation entity in accordance with an embodiment of this invention. The signaling access adaptation entity includes a signaling access adaptation unit and a self-service adaptation entity. The signaling access adaptation unit converts self-service signaling from a circuit switched terminal into IP-based signaling such as SIP signaling or XCAP signaling for transmitting information in the IMS network. The self-service adaptation entity controls a self-service-related IMS network entity to configure service data associated with the self service.

According to the above solution provided by the embodiments of this invention, the self-service adaptation entity communicates self-service command codes with the circuit switched terminal and analyzes the self-service command codes. The IMS server configures service data associated with the self service according to an analyzing result, thereby enabling a user using a conventional circuit switched terminal to conduct self-service operations such as a service registration activation, cancellation and authentication through human-machine interfaces. The solution provided by embodiments of this invention is suitable for an IMS-based circuit domain emulation application, an application using an IMS network compatible with circuit switched terminals or the like, and has bright future.

The previous description of the disclosed embodiments is provided to enable those skilled in the art to make or use the present invention. Various modifications to these embodiments will be readily apparent to those skilled in the art and generic principles defined herein may be applied to other embodiments without departing from the scope of the invention. Thus, the present invention is not intended to be limited to the embodiments shown herein but is to be accorded the widest scope consistent with the principles and novel features disclosed herein.

## Claims

1. A method for implementing a self service by using a circuit switched terminal, comprising:
communicating a self-service signaling associated with a self service between a self-service adaptation entity and a circuit switched terminal; and
conducting, by the self-service adaptation entity, a configuration of service data of the self service on an IP Multimedia Subsystem IMS network entity associated with the self service.

2. The method of claim 1, wherein the communicating self-service signaling associated with a self service between a self-service adaptation entity and a circuit switched terminal comprises:
transmitting, by the circuit switched terminal, the self-service signaling to the self-service adaptation entity via a user-network interface; and
the conducting, by the self-service adaptation entity, a configuration of service data of the self service on an IMS network entity associated with the self service comprises:
conducting, by the self-service adaptation entity, a service data modification or query on the IMS network entity associated with the self service.

3. The method of claim 1, wherein the communicating self-service signaling associated with a self service between a self-service adaptation entity and a circuit switched terminal comprises:
transmitting, by the circuit switched terminal, the self-service signaling to the self-service adaptation entity via a user-network interface; and
transmitting, by the signaling access adaptation entity, the self-service signaling to the self-service adaptation entity via a Session Initiation Protocol SIP; and
the conducting, by the self-service adaptation entity, a configuration of service data of the self service on an IMS network entity associated with the self service comprises:
conducting, by the self-service adaptation entity, a service data modification or query on the IMS network entity associated with the self service.

4. The method for claim 3, wherein the transmitting, by the signaling access adaptation entity, the self-service signaling to the self-service adaptation entity via an SIP comprises:
after receiving the self-service signaling, converting, by the signaling access adaptation entity, the self-service signaling into an SIP signaling, and
the SIP signaling the self-service adaptation entity.

5. The method of claim 1, wherein the communicating self-service signaling associated with a self service between a self-service adaptation entity and a circuit switched terminal comprises:
transmitting, by the circuit switched terminal, the self-service signaling to the self-service adaptation entity via a user-network interface; and
transmitting, by the signaling access adaptation entity, the self-service signaling to the self-service adaptation entity via a Session Initiation Protocol SIP signaling; and
the conducting, by the self-service adaptation entity, a configuration of service data of the self service on an IMS network entity associated with the self service comprises:
conducting, by the self-service adaptation entity, a service data modification or query on the IMS network entity associated with the self service via an Extensible Markup Language Configuration Access Protocol XCAP.

6. The method of any of claims 1-5, wherein the IMS network entity associated with the self service comprises an IMS application server or a Home Subscriber Server HSS.

7. The method of any of claim 1, 2, 3 or 5, wherein the circuit switched terminal comprises a fixed circuit switched terminal or a mobile circuit switched terminal.

8. The method of any of claims 1-5, wherein the configuration of service data of the self service comprises at least one of service registration activation, service cancellation and service authentication.

9. A system for implementing a self service by using a circuit switched terminal, comprising:
a circuit switched terminal, adapted to communicate a self-service signaling associated with a self service with a self-service adaptation entity;
an IP Multimedia Subsystem IMS network entity, adapted to configure service data of the self service; and
the self-service adaptation entity, adapted to communicate the self-service signaling associated with the self service with the circuit switched terminal, and control the IMS network entity to configure the service data of the self service.

10. The system of claim 9, further comprising:
a signaling access adaptation entity, adapted to receive the self-service signaling from the circuit switched terminal, convert the self-service signaling into the an SIP signaling, and send the SIP signaling to the self-service adaptation entity.

11. The method of claim 9 or 10, wherein the IMS network entity associated with the self service comprises an IMS application server or a HSS.

12. The method of claim 9 or 10, wherein the self-service adaptation entity comprises a unit adapted to analyze the self-service signaling.

13. A self-service adaptation entity, comprising:
a first unit, adapted to communicate a self-service signaling associated with a self service with a circuit switched terminal; and
a second unit, adapted to control an IP Multimedia Subsystem IMS network entity associated with the self service to configure service data of the self service.

14. The self-service adaptation entity of claim 13, further comprising:
a third unit, adapted to analyze the self-service signaling.

15. A signaling access adaptation entity, comprising:
a signaling access adaptation unit, adapted to convert a self-service signaling associated with a self service from a circuit switched terminal into an IP-based signaling; and
a self-service adaptation entity, adapted to control an IP Multimedia Subsystem IMS network entity associated with the self service to configure service data of the self service according to the IP-based signaling.
